Europäisches Patentamt

European Patent Office

Office européen des brevets

(19)

(11) Numéro de publication : **0 018 945**
**B1**

(12) **FASCICULE DE BREVET EUROPÉEN**

(45) Date de publication du fascicule du brevet :
08.02.84

(51) Int. Cl.³ : **G 01 B  5/06, G 01 B  5/00**

(21) Numéro de dépôt : **80810130.7**

(22) Date de dépôt : **18.04.80**

(54) Dispositif pour le contrôle de cales-étalons.

(30) Priorité : 25.04.79 CH 3884/79

(43) Date de publication de la demande :
12.11.80 Bulletin 80/23

(45) Mention de la délivrance du brevet :
08.02.84 Bulletin 84/06

(84) Etats contractants désignés :
DE GB SE

(56) Documents cités :
GB-A-  166 248
US-A- 3 816 930
US-A- 3 918 167
MEASUREMENT TECHNIQUES, vol. 19. no. 7, juillet 1976 NEW YORK (US) IVANOV A.M.: "Microscope Table", pages 1072 à 1074
Mahr: catalogues 74D/2 et 70F

(73) Titulaire : **MESELTRON S.A.**
**Avenue de Beauregard 14/18**
**CH-2035 Corcelles (CH)**

(72) Inventeur : **Robert, René**
**Rue Georges Perrenoud 36**
**CH-2400 Le Locle (CH)**

(74) Mandataire : **Gresset, Jean et al**
**ASUAG Département Brevets et Licences Faubourg du Lac 6**
**CH-2501 Bienne (CH)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Dispositif pour le contrôle de cales-étalons

La présente invention a trait à un dispositif de contrôle de cales-étalons et au procédé de contrôle au moyen du dispositif. Le dispositif permet d'effectuer une comparaison de la cale-étalon à contrôler avec une référence, cette référence étant le plus souvent également une cale-étalon. Le dispositif comprend un statif-support et un ensemble palpeur.

Le contrôle de cales-étalons peut se faire par des moyens interférométriques fournissant la valeur absolue de la longueur de la cale, ou par des moyens mécaniques en effectuant une comparaison avec une référence. Cette référence est le plus souvent également une cale-étalon de classe supérieure.

Des dispositifs pour le contrôle par comparaison de cales-étalons sont connus et utilisés dans des instituts tels que les bureaux de mesures pour le contrôle des étalons de longueurs. On les trouve également chez les fabricants de cales-étalons pour le contrôle de leur production de même que dans bien des ateliers mécaniques pour le contrôle de jeux de cales utilisées fréquemment par rapport à des cales neuves.

Les dispositifs connus se présentent généralement sous la forme suivante : sur un statif-support l'on prévoit un ensemble palpeur, constitué de manière générale de deux palpeurs placés à l'opposé l'un de l'autre selon une verticale. L'objet à mesurer est placé entre les deux palpeurs qui sont ensuite rapprochés jusqu'à l'établissement du contact mécanique de part et d'autre. La force de contact exercée par le palpeur supérieur est intentionnellement supérieure à celle du palpeur inférieur afin de garantir la stabilité du système surtout lors de la mesure de très petites cales. Chaque palpeur est relié à un capteur mécanique (aussi connu sous le nom de comparateur) ou à un capteur-transducteur fournissant un signal électrique à un amplificateur électronique. Le deuxième cas, qui est également le plus répandu, prévoit généralement un amplificateur permettant d'effectuer les mesures en différentiel, fournissant directement la différence des longueurs.

Le procédé de mesure est donc le suivant : on effectue une première mesure de la cale de référence suivie d'une mesure de la cale à contrôler. En utilisant un amplificateur différentiel, on le règle sur une valeur arbitraire lors de la première mesure, par exemple « 0 », ce qui permet d'obtenir lors de la deuxième mesure directement la différence de longueur, ou « l'erreur » de la cale par rapport à la référence.

Obligatoirement il y a lieu d'effectuer une manipulation des cales-étalons pour amener celle de référence sous les palpeurs et la remplacer ensuite par celle à contrôler. Une deuxième manipulation intervient lors du contrôle de la planéité des faces de mesure où la mesure de la longueur au centre de la face est répétée aux quatre coins de la face de mesure.

Au lieu de prévoir une manipulation des cales, il serait possible en théorie d'envisager un ensemble palpeur mobile, pouvant être amené sur les points de mesure. Le dispositif présenterait alors non seulement un mécanisme beaucoup plus complexe mais également une fiabilité insuffisante pour garantir des précisions de mesure au centième de micromètre.

Les dispositifs comparateurs les plus répandus prévoient donc un ensemble palpeur fixe et un moyen pour manipuler les cales.

Le moyen de manipulation adopté par la plupart des constructeurs de dispositifs de contrôle par comparaison comprend un guide entraînant simultanément la référence (ou cale-référence) et la cale de mesure. les cales sont entraînées sur une surface horizontale du statif. Cette surface plane du statif consiste en l'enveloppe de rouleaux ou goupilles parfaitement cylindriques et de même diamètre, cependant à l'exception des deux rouleaux du centre qui eux sont d'un diamètre légèrement plus grand, libres en rotation sur leurs axes, disposés de manière parallèle entre eux, permettant un déplacement sans frottement de la surface inférieure des cales dans le sens du roulement et avec un frottement minime sur des portions de surfaces très petites dans le sens axial. Les petites irrégularités inévitables des surfaces n'influencent pratiquement pas la mesure qui se fait en différentiel.

Un tel dispositif fait par exemple l'objet du prospectus 74D/2 de la société allemande Carl Mahr, D73 Esslingen a.N., mais cet agencement présente des inconvénients majeurs.

La paire de cales est traînée sur une surface, ce qui immanquablement occasionne des raies soit sur la surface d'appui de la cale, soit sur les rouleaux. Des poussières sur les rouleaux peuvent conduire à des erreurs de mesure, soit parce que la poussière s'est transposée sur la surface de mesure, soit parce qu'elle provoque une inclinaison de la cale, d'où un manque de perpendicularité de la mesure.

L'entraînement des cales au moyen d'un guide présente également des inconvénients majeurs. Il faut un jeu de guides de différents types pour entraîner des cales de 0,5 mm et des cales de 150 mm par exemple. En entraînant des cales de faible épaisseur, on court toujours le risque de les voir glisser sous le guide. En entraînant des cales de longueur supérieure, par exemple supérieure à 50 mm, le guide doit pouvoir entraîner la cale de manière parfaitement verticale, et doit pouvoir garantir une position verticale de la cale à la fin du mouvement. Pour ce faire, le guide offre deux lignes d'appui sur les quatre surfaces latérales de la cale, ce qui n'empêche pas la cale de subir des à-coups et la perte de sa position verticale selon les déplacements qu'elle subit, les variations du coefficient du frottement de la surface d'appui avec les rouleaux, etc. Ainsi, la comparaison de cales avec les dispositifs connus est longue, fastidieuse et peu fiable. La répétition de la mesure ne fournit que rarement le même résultat au centième de micromètre. Le but de l'invention est précisément de remédier aux inconvénients cités.

Par ailleurs, le brevet GB-A-1 662 248 décrit un dispositif permettant de comparer la hauteur de deux cales-étalons placées côte à côte sur un plateau. A cet effet, un palpeur muni de deux billes d'acier est amené au-dessus des cales de façon que chaque bille vienne au contact de la surface supérieure de l'une des cales, et l'inclinaison du palpeur est alors mesurée. Ensuite, le plateau est soumis à une rotation précise de 180°, et une nouvelle mesure de l'inclinaison du palpeur est effectuée, les positions des deux cales étant ainsi inversées. La différence d'inclinaison du palpeur d'une mesure à l'autre est alors représentative de leur différence de hauteur.

Dans ce dispositif, les cales ne sont pas traînées sur la surface du plateau, mais il n'est pas possible d'effectuer des mesures en plus d'un point de la surface supérieure de chaque cale. En outre, le dispositif ne met pas en œuvre un palpeur de mesure inférieur.

L'invention telle que définie dans les revendications, permet de contrôler par comparaison une cale-étalon et une référence, sans les traîner sur leur surface d'appui, mais en les supportant et en les déplaçant entre deux palpeurs au moyen d'un plateau mobile horizontalement et présentant des trous pour le passage de la tête du palpeur inférieur.

L'invention sera bien comprise à la lecture de la description suivante, faite en relation avec les dessins joints.

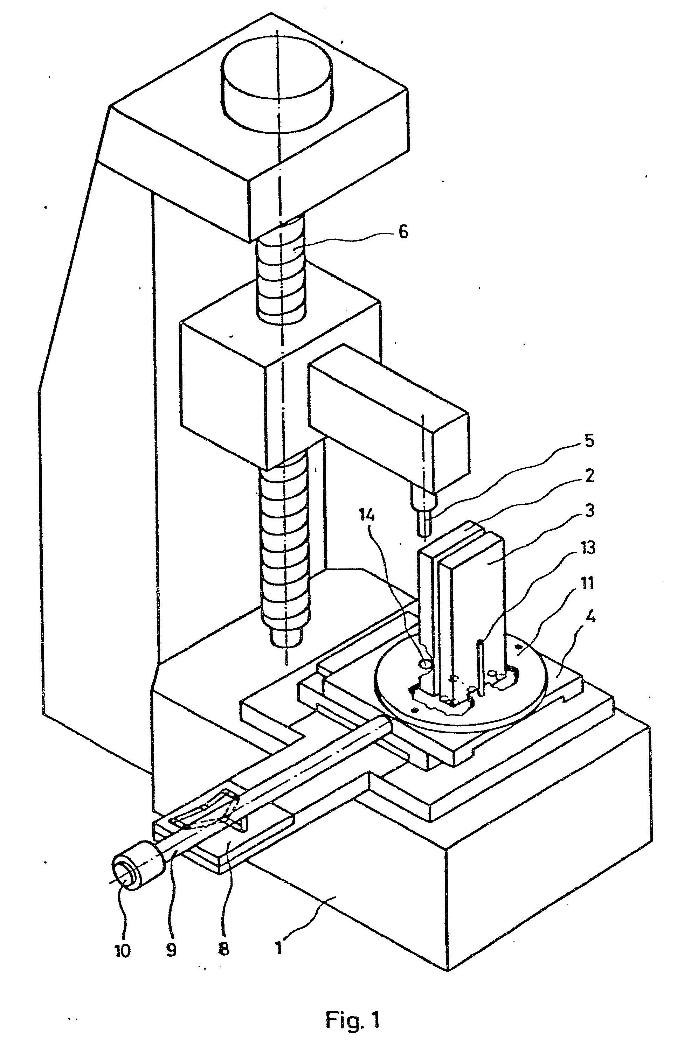

La figure 1 est une vue générale du dispositif selon l'invention.

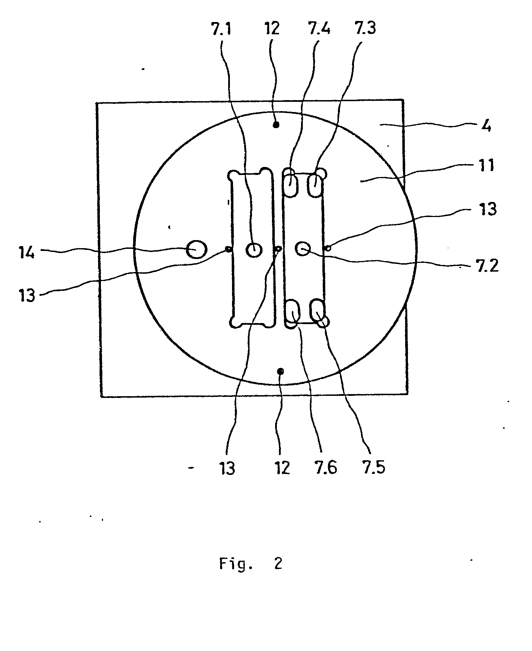

La figure 2 est une vue en détail du plateau.

On reconnaît en (1) le statif-support du dispositif de contrôle de cales-étalons, en (2) la cale-étalon de référence et en (3) la cale-étalon à contrôler par comparaison. Les cales (2), (3) reposent sur un plateau (4) mobile horizontalement mais lié au statif (1). Il peut s'agir de toute table X-Y disponible dans le commerce, pourvue de guidages non grippants de préférence à roulements ou galets.

Les cales-étalons sont palpées depuis le haut par le palpeur supérieur (5). Le guidage fileté (6), ou tout autre moyen adéquat, permet de fixer grossièrement la position verticale du palpeur (5) afin que sa propre course, nécessaire à la mesure, puisse se limiter à quelques dixièmes de millimètres.

Le palpage de la surface de mesure inférieure se fait par un palpeur au travers de trous (7.1), (7.2), (7.3), (7.4), (7.5), (7.6) positionnés de façon adéquate sur le plateau mobile (4). En effet, la comparaison de cales se fait toujours de façon normalisée aux mêmes points de la surface de la cale. De plus, toutes les cales ont une surface de mesure normalisée à 9 × 30 mm ou 9 × 35 mm. Pour que les deux types de cales puissent être contrôlés sur le même plateau (4) il suffit de prévoir des trous (7.3) à (7.6) face aux quatre coins de la cale légèrement allongés. Le trou (14) correspond à celui du plateau en position dégagée pour faciliter la manipulation des cales. Le plateau (4) peut être conduit aux différents points de mesure manuellement ou automatiquement.

Pour un entraînement automatique, il suffit de prévoir un moteur programmé pour s'arrêter aux différents points de mesure pendant que la mesure est effectuée.

Pour un entraînement manuel, il est avantageux de prévoir un chablon (8) qui permet de guider, par la goupille d'une tige (9) rigidement liée au plateau (4), le plateau (4) aux différents points de mesure. Le chablon (8) est interchangeable pour les deux types de cales-étalons de 9 × 30 ou 9 × 35 mm.

Une amélioration supplémentaire de l'entraînement manuel consiste à prévoir un mécanisme relié à un bouton-poussoir (10) sur la tige (9) par exemple. Le mécanisme permettrait de dégager les palpeurs supérieurs et inférieurs par actionnement du bouton-poussoir (10) et le blocage du plateau (4) de même que la mise en contact des palpeurs par relâchement du bouton-poussoir (10) sur une position de mesure.

Il est évidemment possible d'envisager une multitude de mécanismes analogues, mécaniques ou électroniques, qui feraient partie intégrante de l'invention.

Le fait que le palpeur inférieur vienne palper les cales au travers de trous (7) prépositionnés dans le plateau (4) exige un positionnement précis des cales par rapport auxdits trous. Ce positionnement précis peut être assuré par exemple par une simple plaque-moule (11) interchangeable, qui comprendrait deux goupilles (12) s'enfonçant dans les trous correspondants pour son propre positionnement sur le plateau, ou bien une fixation par vis.

Ces plaques pourraient être pourvues de tiges (13) verticales de part et d'autre des faces latérales larges des cales d'une certaine longueur afin d'offrir un soutien en cas de manipulation brusque du plateau (4).

Notons que ces plaques-moules sont d'une conception bien plus simple que les guides utilisés avec les dispositifs de contrôle par comparaison connus. Une même plaque-moule peut être utilisée pour une cale de quelque longueur comprise entre 0,5 mm et 150 mm par exemple. Seule la surface trouée doit être une fois prévue de 9 × 30 mm et une autre fois 9 × 35 mm. La plaque-moule n'est plus responsable pour le maintien de la cale-étalon en position verticale.

Notons également qu'avec le dispositif selon l'invention le contrôle de cales est grandement simplifié. La manipulation qui exigeait plusieurs minutes de tâtonnements et de mesures peu fiables se fait maintenant grâce au dispositif et à un amplificateur différentiel approprié en une trentaine de secondes, y compris le contrôle de la planéité, au centième de micromètre pour toute cale comprise entre 0,5 et 150 mm par exemple. Aussi, les références, le plus souvent des cales-étalons de référence, ne subissent aucune usure ou rayures lors d'utilisations successives pour le contrôle des cales, ce qui n'est pas le cas avec les appareils connus.

## Revendications

1. Dispositif pour le contrôle d'une cale-étalon (3) par comparaison de la cale-étalon avec une référence (2), comprenant notamment
— un statif-support (1) ;
— un ensemble de mesure solidaire du statif-support et comportant un palpeur supérieur (5) et un palpeur inférieur disposés l'un en face de l'autre et selon une verticale ; et
— des moyens pour amener successivement la cale-étalon et la référence dans l'intervalle formé entre les palpeurs,
caractérisé en ce que lesdits moyens sont constitués par un plateau (4) prévu pour supporter et déplacer simultanément la cale-étalon et la référence, ce plateau étant monté sur le statif-support (1) de façon à pouvoir être déplacé horizontalement selon au moins deux directions et présentant des trous (7.1-7.5) disposés aux endroits appropriés pour le passage de la tête du palpeur inférieur.

2. Dispositif selon la revendication 1, caractérisé en ce que le plateau est une table X-Y.

3. Dispositif selon la revendication 2, caractérisé en ce que la table X-Y est pourvue de guidages à roulement.

4. Dispositif selon l'une quelconque des revendications précédentes, caractérisé en ce que les trous (7.3, 7.4, 7.5, 7.6) du plateau prévus pour le passage de la tête du palpeur inférieur en vue du contrôle des quatre coins de la cale-étalon présentent une forme allongée.

5. Dispositif selon l'une quelconque des revendications précédentes, caractérisé en ce qu'il comprend un automatisme permettant le transport du plateau d'un point de mesure à un autre de façon automatique.

6. Dispositif selon l'une quelconque des revendications 1 à 4, caractérisé en ce qu'il comprend un chablon (8) interchangeable et une tige horizontale (9) rigidement liée au plateau, pourvue d'une goupille pénétrant dans le chablon pour le guidage manuel du plateau aux différentes positions de mesure.

7. Dispositif selon la revendication 6, caractérisé en ce qu'il comprend en plus un mécanisme relié à un bouton-poussoir (10), ledit mécanisme désengageant les palpeurs par actionnement du bouton-poussoir, engageant et bloquant le plateau sur une position de mesure par relâchement du bouton-poussoir.

8. Dispositif selon l'une quelconque des revendications précédentes, caractérisé en ce qu'il comprend une plaquette-moule (11) s'adaptant sur le plateau (4).

## Claims

1. A device for testing a gauge-block (3) by comparing the gauge-block with a standard (2) comprising
— a stand
— a measurement unit secured to the stand and including an upper feeler (5) and a lower feeler disposed opposite one another along a vertical axis ; and
— means for successively moving the gauge-block and the standard in the gap between the feelers,
characterized in that said means comprise a carrier plate (4) adapted to support and move both the gauge-block and the standard simultaneously, said carrier plate being so mounted on the stand (1) as to be horizontally movable along at least two axes and being provided with apertures (7.1-7.5) at appropriate locations for the passage therethrough of the head of the lower feeler.

2. A device according to claim 1, characterized in that the carrier plate is an X-Y table.

3. A device according to claim 2, characterized in that the X-Y table is provided with guide means including rolling elements.

4. A device according to any preceding claim, characterized in that the apertures (7.3, 7.4, 7.5, 7.6) provided in the carrier plate (4) for the passage therethrough of the head of the lower feeler for testing the four corners of the gauge-block are of elongated shape.

5. A device according to any preceding claim, characterized in that it comprises automatic means for automatically moving the carrier plate from one measuring position to another.

6. A device according to any one of claims 1 to 4, characterized in that it comprises an interchangeable grooved guide member and a horizontal rod (9) rigidly secured to said plate and provided with a pin engaging in said grooved guide member for manually guiding the carrier plate to the various measuring positions.

7. A device according to claim 6, characterized in that it further comprises a mechanism connected to a push-button (10), said mechanism disengaging the feelers through actuation of the push-button, engaging and locking the carrier plate in a measuring position through release of the push-button.

8. A device according to any preceding claim, characterized in that it comprises a setting plate (11) mountable on said carrier plate (4).

## Ansprüche

1. Vorrichtung zur Kontrolle eines Eichblocks (3) durch Vergleich des Eichblocks mit einem Bezugsblock (2) mit
— einem Stativträger (1) ;
— einer mit dem Stativträger fest verbundenen Messeinheit, die einen oberen (5) und einen unteren senkrecht gegenüberliegenden Messfühler aufweist ; und
— Mittel zum nacheinander Zubringen des Eichblocks und des Bezugsblocks in den Raum zwischen den Fühlern,
dadurch gekennzeichnet, dass die Mittel aus einer Platte (4) bestehen, die für ein gleichzeitiges Tragen und Verchieben des Eichblocks und des Bezugsblocks vorgesehen ist, und die so auf dem Stativträger (1) montiert ist, dass sie horizontal in wenigstens zwei Richtungen verschoben werden kann und Löcher (7.1-7.5) an den für den Durchgang des unteren Fühlerkopfes geeigneten Stellen aufweist.

2. Vorrichtung nach Anspruch 1, dadurch gekennzeichnet, dass die Platte ein X-Y Tisch ist.

3. Vorrichtung nach Anspruch 2, dadurch gekennzeichnet, dass der X-Y Tisch mit Lagerführungen versehen ist.

4. Vorrichtung nach einem der obigen Ansprüche, dadurch gekennzeichnet, dass die Löcher (7.3-7.4-7.5-7.6), die für den Durchgang des unteren Fühlerkopfes vorgesehen sind, zur Kontrolle der vier Ecken des Eichblocks eine längliche Form aufweisen.

5. Vorrichtung nach einem der obigen Ansprüche, dadurch gekennzeichnet, dass sie eine Automatik aufweist, die den Transport der Platte von einem Messpunkt zu einem anderen auf automatischer Weise gestattet.

6. Vorrichtung nach Anspruch 1 bis 4, dadurch gekennzeichnet, dass sie eine austauschbare Schablone (8) und eine horizontale Stange (9) aufweist, die Starr mit der Platte verbunden und mit einem Stift versehen ist, der in die Schablone für die manuelle Führung der Platte zu den verschiedenen Messtellen eindringt.

7. Vorrichtung nach Anspruch 6, dadurch gekennzeichnet, dass sie ausserdem einen mit einem Druckknopf (10) verbundenen Mechanismus aufweist, der durch Betätigung des Druckknopfes die Fühler freigibt und die Platte in einer Messtellung durch Freigabe des Druckknopfes einspannt und verriegelt.

8. Vorrichtung nach einen der obigen Ansprüche, dadurch gekennzeichnet, dass sie ein Formplättchen (11) aufweist, das sich der Platte (4) anpasst.

Fig. 1

Fig. 2